# EUROPEAN PATENT SPECIFICATION

(11) **EP 3 324 151 B1**
(45) Date of publication and mention of the grant of the patent: **27.05.2020**
(21) Application number: 17201875.6
(22) Date of filing: 15.11.2017
(51) Int. Cl.: G01C 9/18, G01C 9/28

(54) **A MAGNETIC OUTFIT FITTED INTO A LEVEL**
EINE IN EINEN WASSERWAAGE ANGEORDNETE MAGNETISCHE EINHEIT
ENSEMBLE MAGNÉTIQUE AJUSTÉ À UN NIVEAU

(30) Priority: 18.11.2016 IT 201600116745
(43) Date of publication of application: 23.05.2018
(73) Proprietor: Metrica S.p.A., 36071 Arizignano (Vicenza) (IT)
(72) Inventor: DORIGUZZI BOZZO, Margherita, 20121 Milano (IT)
(74) Representative: Ripamonti, Enrico

(56) References cited:
- WO-A1-97/13119
- AT-A4- 517 065
- JP-A- H11 183 169
- JP-A- H11 183 170
- US-A- 3 046 672
- US-A1- 2006 107 541

## Description

The subject of the present invention is a magnetic outfit configured to be removably mounted into a non-magnetic level. A magnetic outfit similar to the one which is the subject of the present invention is described in WO 97/13119.

Various models of magnetic levels are known, i.e. levels with a usually parallelepiped prismatic polygonal body, which have a level base or magnetic side, and a section which is at least partly hollow. In the known solutions, inside the cavity of the level, there are present magnetic means which can make it possible to secure the level, by magnetic attraction, on a surface made of ferrous metal material, for measurement of the inclination of the surface. The inclination is determined by means of a conventional indicator placed on an outer face of a side of the body of the level opposite the base or magnetic side.

Usually, the magnetic means are permanent magnets with the form of a parallelepiped or disc; they face out at respective openings provided in the magnetic side of the body of the level.

From the structural point of view, this production is costly, both in terms of production of the openings in the base of the level, and of subsequent fitting of the magnets at the openings.

In a known embodiment of this type, the magnets can be seen through these openings or through-holes in the magnetic side. However, because of a possible fitting defect, it may happen that the magnets are not always correctly arranged parallel to the base, and, since they must not project from this base (in order not to interfere with the measurement), they are often slightly sunken in their respective holes. Consequently, dust can accumulate in these holes, and small ferrous residues may gather which are difficult to remove, and can distort the use of the level.

Another known solution includes the arrangement inside a corresponding groove along the outer face of the base of one or a plurality of flexible magnetic strips made of rubbery magnetic material. However, this solution has not been widely used because said magnetic strips are unable to generate a magnetic attraction force which is sufficient to permit securing of the level on a ferrous metal surface. In addition, the rubbery surface can deteriorate, as well as being easily scratched, with a consequent accumulation or stagnation of ferrous powder which can detract from the levelness of the base of the level.

WO 97/13119 describes a level which is produced as a hollow profile, and has at least one bubble-type indicator.

This body has a through-hole at which, inside said body, a support is present for the bubble-type indicator, which can therefore be seen from three sides of the level.

Inside the level body, there is present at least one support (made of plastic material) for at least one magnet which can adhere to a measurement surface. This support (which has dimensions larger than the cavity of the level) can be inserted by means of resilient deformation inside the cavity of the level body, via an open end of said cavity, and can be blocked by friction further to the resilient decompression sustained. More specifically, for this blocking, said support has resiliently yielding parts which, by deformation, can permit the insertion of said support in the level body, and, when the thrust for the insertion is no longer applied, these parts can permit blocking of the support itself by means of its expansion and blocking of the magnet it supports in the cavity of said level body.

For its use, this known solution is based solely on the resilient deformation of the magnet support: by means of this deformation the insertion and blockage of the support and magnet assembly is obtained in the cavity of the level body.

However, during use of the level, because the level itself is dropped, banged and shaken, the pressing action of the resilient support on the walls of the cavity may be overcome by the force generated by the banging or dropping, and the blocking in the level instantly fails.

Consequently, this support is displaced inside the level, which may unbalance the level itself, thus making its use difficult, and making the measurement of the inclination of the surface on which it is supported imprecise.

In fact, experience has shown that the interference between the resilient support and the walls of the cavity of the level must be very low if it is wished to guarantee the ease of insertion, and for this reason it is not possible to guarantee simultaneously the holding in a particular position in these walls by means of simple compression/decompression: in particular it is sufficient to bang the level or drop it in a vertical position for the support to be displaced inside the level itself. On the other hand, if the interference were too great, the possibility of insertion would not be guaranteed because of the excessively great friction.

The prior art also refers to the use of adhesive in order to block the support in the cavity. In this case, the support would remain permanently blocked, and would no longer be removable.

The objective is to provide a magnetic outfit which can also be inserted or removed by the user into or from a cavity of a generic level (made of non-magnetic material) such as to be able to transform this measurement unit into a magnetic level, or vice versa into a level without a magnet.

This objective and others which will be apparent to persons skilled in the art are achieved by a magnetic level according to the independent claims.

Said objective and also others which will be apparent to persons skilled in the art are achieved by a magnetic outfit which can be associated with a generic level made of non-magnetic material according to the corresponding independent claims.

For better understanding of the present invention, purely by way of non-limiting example, the following drawings are appended, in which:
figure 1 shows a partial exploded view in perspective, with some parts omitted, of a magnetic outfit according to the invention;
figure 2 shows a partial view in perspective, with some parts omitted, of the level in figure 1 during a phase of its assembly;
figure 3 shows a view from below of the level in figure 1;
figure 4 shows a view from below of the level in figure 2;
figure 5 shows a partial view in cross-section, along its longitudinal axis, of the level in figure 1 assembled;
figure 6 shows a partially exploded view in perspective of a magnetic outfit which can be inserted inside the level in figures 1-5;
figure 7 shows a view in perspective from the front of the outfit in figure 6;
figure 8 shows an exploded view of a variant of the invention;
figure 9 shows a view from the front of the variant in figure 8; and
figure 10 shows a lateral view of a variant of part of the level according to the invention.

With reference to the figures in question, they show partially a magnetic level 1 with a level body 2, made of non-magnetic material and with a prismatic form. This body 2 has an inner cavity 3 delimited by a plurality of sides 4, 5, 6 and 7. The level body 2 has a rectangular cross-section (i.e. it has a parallelepiped form), but it can have any polygonal cross-section; this body has at least one side (indicated hereinafter as the level base) which acts as a support base for the level itself. Said body also has opposite ends 8 (only one of which can be seen in the figures), usually closed by a known removable stopper (not shown).

Each side 4-7 has an inner face 4A, 5A, 6A, 7A facing towards the cavity 3, and an outer face 4B, 5B, 6B, 7B.

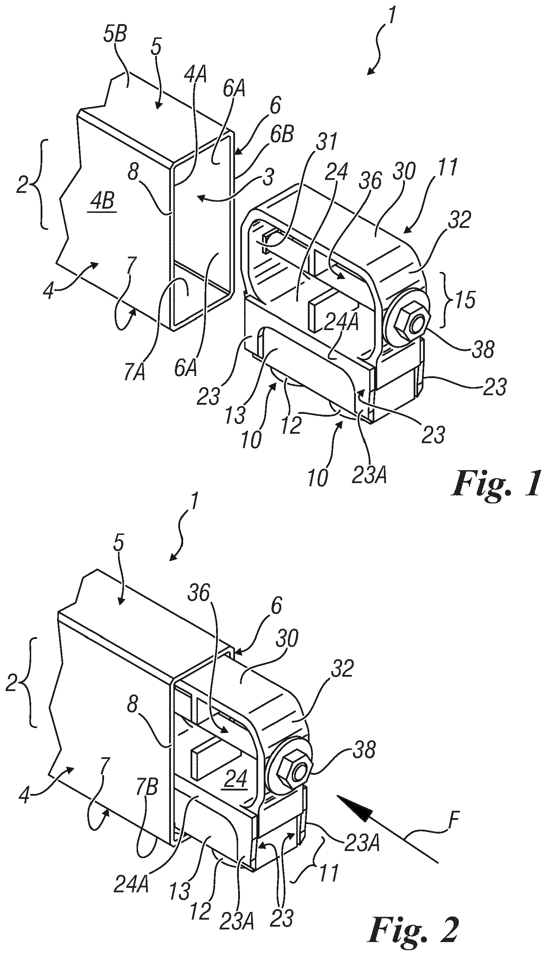

The side 7 (the lower side in figures 1, 2 and 5) acts as a base for the level ("level base"), and will also be indicated as such subsequently in the present description. The side 7 is completely without openings.

The level 1 comprises magnetic means 10 (defined by permanent magnets) which can be functionally associated with the level base 7, such as to make it possible to secure the level 1 (with a body 2 made of non-magnetic material) by magnetic attraction on a ferrous surface, the inclination of which is to be determined relative to a horizontal reference. For this purpose, i.e. for this determination, on the side 5 opposite the level base 7, the level has a conventional element for determination of slope (not shown), such as a vial containing a liquid and an air bubble.

More particularly, inside the cavity 3 of the level, a magnetic outfit 11 can be inserted supporting the magnetic means 10, defined in the embodiment provided by way of non-limiting example in the figures, by a pair of magnetic discs 12 (or cylindrical elements) made of neodymium, which are integral with a rigid ferrous element 13; on a surface S of this element 13, the discs 12 are secured by means of magnetic coupling, or are optionally accommodated in corresponding seats provided in the surface S. The rigid ferrous element 13 can close the magnetic field generated by the discs 12, thus reinforcing the effect of constraint of the level on the surface on which it is placed. In addition, the ferrous element 13 in turn is associated with a support body 15 made of deformable non-magnetic material: for example this material is plastic material such as ABS or nylon.

The magnetic outfit 11 has dimensions smaller than those of the cavity 3, such as to be able to be inserted freely in it.

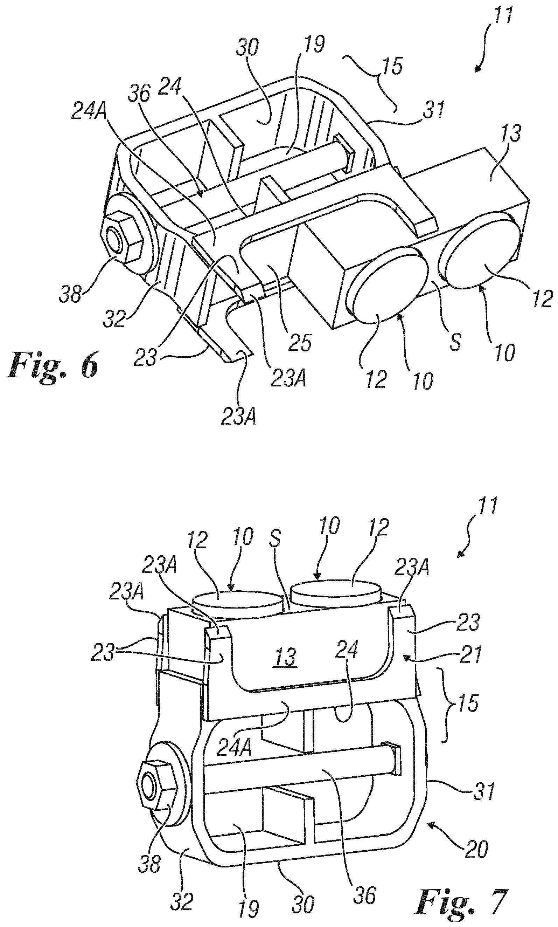

With reference to figures 1-7, the non-magnetic deformable support body 15 has a first portion 20 and a second portion 21, which is placed on a side of the first portion 20, and can constrain the rigid ferrous element 13 to which there adhere magnetically the magnetic discs 12, the free wall of which is parallel to the wall 7A of the level base, after the discs have been inserted in the cavity 3. This second portion 21 comprises resilient arms 23 projecting from a first wall 24 of the first portion 20, and delimiting (partially, with a raised perimeter edge 24A of the wall 24) a cavity 25 which can receive the rigid ferrous element 13. These arms 23 are slightly folded back towards the inside of this cavity, and there are four of them, delimiting the angles of this cavity; the arms are opposite one another in pairs, and are folded back in each pair towards one another at least with their free end 23A. This makes it possible to introduce the rigid ferrous element 13 inside the cavity 25 by means of resilient deformation of the arms 23, which, by this means, retain said rigid ferrous element resiliently when it is inserted in this cavity (by means of the edge 24A).

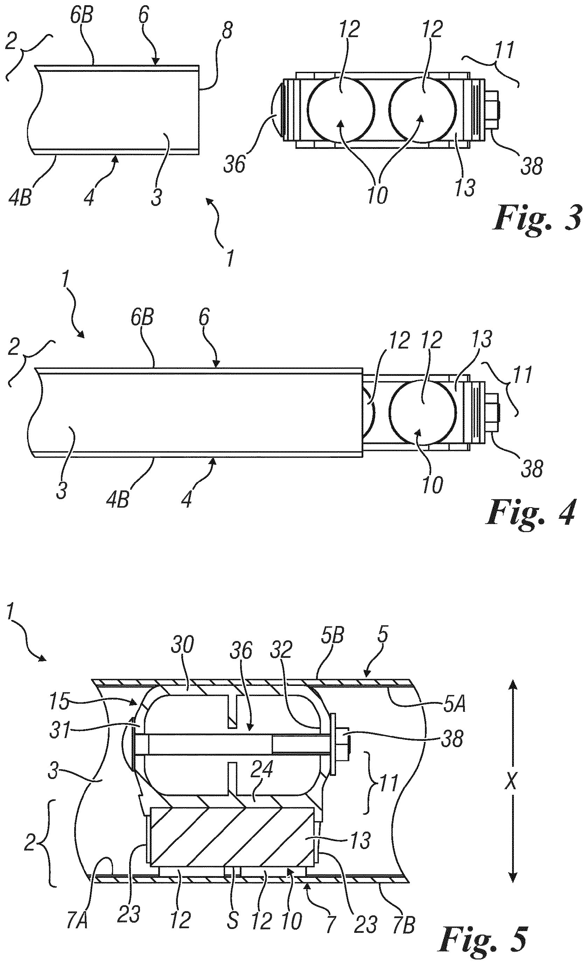

The first portion 20 of the support body 15 is hollow, with an inner cavity 19 closed on four consecutive sides by walls 30, 31, 32 and by the aforementioned wall 24. The second wall 30 is parallel to the first wall 24, whereas the third and fourth walls 31 and 32, which are opposite one another and connected to the ends of the walls 24 and 30, are slightly curved, and can also have a thickness smaller than that of the walls 24 and 30. A screw (or deforming screw unit) 36 which acts as a tie rod connects the walls 31 and 32. In the figures, this screw cooperates with an associated nut 38 on the outside of the wall 32 (with the screw having a head close to the side 31). If, as shown in the figures, the walls 31 and 32 are curved with opposite concavities, the screwing of this screw into the nut leads to a movement of bringing towards one another the walls 31 and 32 (which will also be indicated as "bendable walls 31 and 32"). Since these bendable walls are curved (or for example also have a polygonal form) with the concavity facing towards the inside (hollow) of the first portion 20 of the non-magnetic deformable support body 15 (i.e. the concavities of the two deformable or bendable walls 31 and 32 face one another), the approach towards one another of these walls 31 and 32 leads to moving apart from one another of the walls 30 and 24, or, in general, to deformation of the magnetic outfit 11 in a direction orthogonal to a surface S of the rigid ferrous element 13 where the magnetic discs 12 are present, i.e. in a direction (indicated by the double arrow X in figure 5) orthogonal to the opposite sides 5 and 7 of the level body 2.

It will be appreciated that the deforming unit or screw 36 can also be screwed into a threaded element other than the nut 38, i.e. for example directly into the wall 32 (and in this case the screw is of the self-tapping type), or into a bush contained in this wall 32 or into a threaded hole provided in this wall 32. Clearly, the bendable walls 31 and 32 have holes for the passage of this screw.

Alternatively, the walls 31 and 32 can still be produced in a curved manner, but with convexities arranged towards the cavity 19 of the first portion 20 (i.e. the convexities of these walls face one another). In this case, the screw 36 is able to "be unscrewed" from the nut 38 (or from the hole in the wall 32 or from the bush placed in this hole) in order to obtain the moving apart from one another of the walls 30 and 24, such as to obtain the vertical elongation of the magnetic outfit 11 as described above.

This solution must also be considered to be included in the present document. It will be appreciated that other embodiments can also be provided: for example, the deformable or bendable walls 31 and 32 can each be defined by parts which are hinged to one another, and can be "elongated" in a direction orthogonal to the surface S by a corresponding actuator element such as the screw 36.

According to a configuration which is even more simplified, but less efficient, which however comprises the use of magnetic means 10 which are more voluminous (and therefore more costly), the rigid ferrous element 13 could also be missing altogether from the non-magnetic deformable support 15. In this case, the (one or more than one) magnetic means could be constrained directly and in a known manner on the support 15, for example inserted in corresponding seats provided in the wall 24.

In this last solution there would be no so-called horseshoe effect typical of the magnets, and thus, for the same volume of the magnetic means, the attraction force would be much smaller. This solution also, which incidentally is not illustrated, is understood to be included in the invention.

With reference once again to figures 1-7, with the screw not screwed (into the nut 38 or into the wall 32), i.e. in a first dimensional configuration, the magnetic outfit 11 has a dimension in the direction orthogonal to the surface S, i.e. in the direction orthogonal to the opposite sides 5 and 7, which is slightly smaller than the distance between the inner face 7A of the level base 7 and the inner face 5A of the wall 5 opposite the level body 2. In this condition, the magnetic outfit 11 can be inserted freely (arrow F in figure 2) in the cavity 3 in the level body, with little play.

During this insertion, the magnetic discs 12 face towards the wall 7A of the level base.

After this insertion, once the required position of the magnetic outfit 11 has been reached, from the outside of the level (via the open end 8) the screw 36 is screwed into the nut 38, and by this means the magnetic outfit 11 adopts a second dimensional configuration, which is stable in the long term (but removable, in the sense that the magnetic outfit can be returned to the first dimensional configuration by acting again on the screw 36 in a manner which is the inverse of the previous one), in which configuration the bendable walls 31, 32 of the first part 20 of the non-magnetic deformable support body 15 are brought towards one another, and the walls 24 and 30 of this part 20 are moved apart from one another. This leads to extension of the magnetic outfit 11 in the direction X, and to blocking of the magnetic outfit 11 in the cavity 3 of the level body, because this deformation of the first part 20 of the non-magnetic deformable support body 15 leads the wall 30 and the magnetic discs 12 to press respectively against the faces 5A and 7A of the walls 5 and 7 of the level body 2.

It should be noted that the non-magnetic support body 15 is deformable by means of the action of the screw 36, but it is not resilient.

In other words, the support 15 according to the present invention (unlike for example the one according to patent document WO 97/13119) is removable and deformable in that, at rest, it has dimensions smaller than the cavity in which it is freely inserted, and in the position of work, i.e. when it is blocked, it is forced by deformation (expansion) caused by the manual actuation of the deforming screw unit 36.

On the other hand, unlike the support according to document WO 97/13119, it has dimensions larger than those of the cavity in which it is inserted, and is blocked by compression of the resilient elements of which it is constituted.

As previously stated, the level base 7 does not have holes or apertures for magnetic discs 12, which therefore remain entirely inside the level body 2, and are thus invisible from the outside. This makes it possible to prevent the problems of the known solutions previously indicated, associated with the presence in them of holes or apertures for the magnets, in which dirt or fine ferrous dust attracted by the magnets nests.

In addition, by unscrewing the screw 36, the magnetic outfit 11 can be extracted once again from the cavity 3, and can be inserted, again stably and securely, in another level body 2 with a base without openings, for example if the previous body were damaged (for example because of breakage of a vial to detect the slope, as previously indicated), thus recreating a new magnetic level.

All of this is achieved using very simple and rapid methods, thanks to the use of the screw 36 and the parts (nut 38, threaded hole or bush) with which it cooperates.

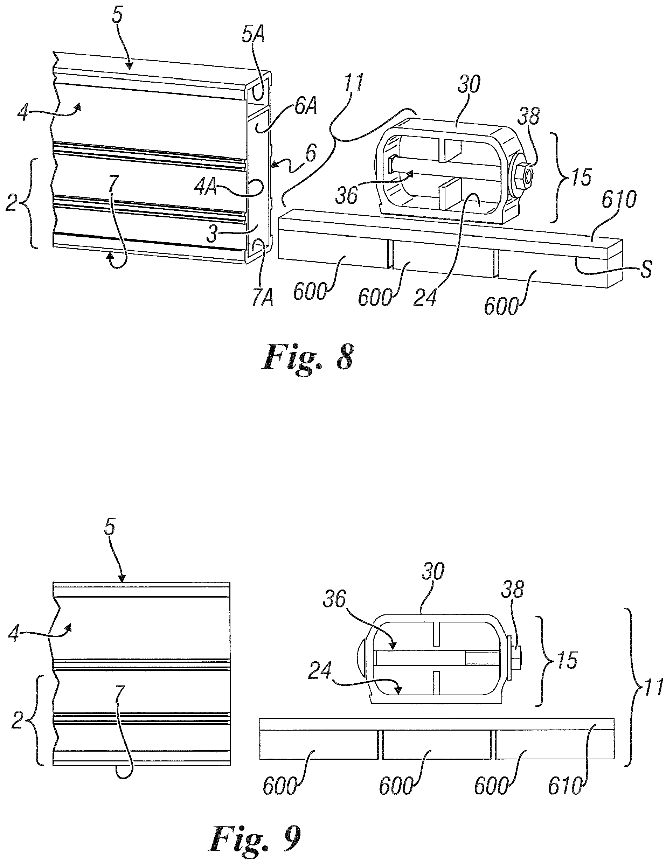

Figures 8 and 9 show a variant of the invention. In it, parts corresponding to those already described are indicated with the same numerical references.

In the figure in question, the magnetic outfit 11 comprises a plurality of components, i.e. permanent magnets 600, a rigid ferrous flat element 610 and a non-magnetic deformable support 15, the latter being similar to the non-magnetic deformable support body 15 in figures 1-7 previously described, but without the portion 21, and delimited by the wall 24. The first component is defined by one or more groups, each of two or more permanent magnetic elements 600, made for example of ferrite with a parallelepiped form, aligned with the longitudinal axis of the cavity 3 of the level 1, with their free face parallel to the wall 7A of the base. These elements are arranged adjacent to one another with opposite polarities, as illustrated hereinafter.

Above said first component 600 there is placed a second component defined by a rigid ferrous flat element 610. This ferrous component 610 has the same function as the rigid element 13 illustrated in figures 1-7, i.e. to close the magnetic field generated by the ferrite elements 600. Unlike figures 1-7, the ferrous element 610 is not contained in the cavity 25 of the portion 21 (which is not provided), but is below the wall 24 of the non-magnetic deformable support 15. Finally, the third component is constituted by the non-magnetic deformable support body 15 (which as previously stated is similar to that in figures 1-7, but without the portion 21), which body however, in the example in figures 8 and 9, is still an independent element, deformable by means of the screw 36 in a direction orthogonal to the level base 7. The deformable support or body 15 is however also considered to be a "support" for the ferrite elements 600, since it contributes towards retaining these magnets in the blocked position inside the level.

The coupling with the level takes place by means of introduction firstly of the assembly constituted by at least two adjacent elements 600 and by the ferrous flat element 610. The first magnetic element 600 has a first polarity which faces towards the ferrous flat element 610, with the second magnetic element 600 having the second polarity facing towards the element 610 (to which these magnets are coupled magnetically). The subsequent overlying insertion of the non-magnetic deformable support body 15, by deformation of itself by means of the manual actuation of the screw 36, leads to blocking of the assembly constituted by the deformable support 15 itself and by the elements 600 and 610 in the cavity 3 in the required position with the lower faces of the magnetic means 600 adhering to the face 7A of the level base.

The difference compared with figures 1-7 thus consists in the fact that the non-magnetic support 15 is not constrained on the magnetic elements 600 and on the ferrous element 610, but is only supported on them, constituting an outfit made of an assembly of three bodies (600; 610; 15).

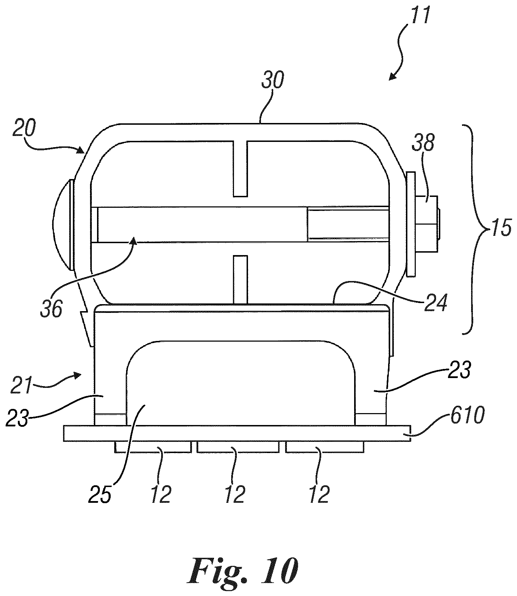

In a further variant embodiment shown in figure 10, the magnetic outfit is defined by at least two magnetic elements 12 in the form of a neodymium disc (like those in figures 1-7), arranged adjacent to one another, with opposite polarities to one another, relative to the flat ferrous element 610 (as already illustrated), which magnetic elements are positioned below, and are coupled magnetically to, the ferrous flat element 610, which in turn is surmounted by the non-magnetic deformable support body 15, which in this case is also provided with the portion 21 described in figures 1-7. The length of the ferrous flat element 610 is at least equal to the distance between the outer faces of the opposite arms 23 of the support 15.

This solution is lighter, it has a smaller longitudinal dimension, and it can generate a magnetic force with greater intensity than that in figures 8-9, since neodymium is a material which is thinner, but far stronger magnetically than ferrite, and because each magnetic outfit could also support three (or more) discs 12.

The difference between the solution in figures 8-9 and that in figure 10 is that the ferrite magnets (figures 8 and 9) are less powerful and are therefore thicker. Thus, for reasons of space, the support 15 is constituted only by the sides 24, 30, 31, 32 (without the arms 23). In figure 10, the magnets are made of neodymium and are therefore thinner, but generate a more intense magnetic field. The arms 23 of the support 15 are used only to recreate sufficient height for the support 15 to be blocked with the wall 30 against the face 5A of the side 5 of the level.

The insertion in the level of the outfit 11 is easier, since the magnetic discs 12 are secured strongly on the ferrous flat element 610, and the assembly can be blocked using the body of the non-magnetic deformable support 15 by means of the screw 36, in a manner altogether similar to that in figures 1-7.

As in the case in figures 1-7, the deformation of the non-magnetic deformable support body 15 is induced manually from the outside (by means of the screw 36).

Thanks to the invention, no magnetic body can be seen from the outside of the level 1, and the magnetic force is transmitted through the thickness of the level base 7, with a considerable saving in the cycle of processing and assembly compared with what happens for the known magnetic levels with openings in the base.

In addition, since the magnetic element 10, 12, 600 is in no case secured permanently on the body of the level, but is always associated with the deformable magnetic outfit 11, which can be inserted into the cavity 3 and extracted from it very simply (having removed the end stoppers which close this cavity), the user can decide according to his own needs to use a heavier level with a magnetic base, or a level without a magnetic base (which is lighter). All of this is without invalidating the calibration already carried out by the manufacturer and the precision of the level itself, since the outer surface 7B of the level base, being completely without openings, is not affected by the insertion, in the cavity 3 of the level, of the outfit which supports the magnetic means.

The presence of the screw 36 ensures stable blocking of the outfit 11 in the level, even after this outfit has been removed from a level previously provided with internal magnets, and has been reused in another level.

## Claims

1. Magnetic outfit (11) configured to be removably inserted in a cavity (3) at one of the ends (8) of a non-magnetic prismatic body (2) of a level (1), wherein the prismatic body (2) of the level has a plurality of sides (4, 5, 6, 7) defining the cavity, one (7) of these sides acting as a level base and other (5) of these sides opposes the level base, each of these sides having an inner face (4A, 5A, 6A, 7A) which faces towards said cavity (3) and an outer face (4B, 5B, 6B, 7B) and comprising magnetic means (10, 12, 600) with a flat base which can be arranged inside this cavity (3) in parallel and adhering to an inner face (7A) of the level base, said magnetic outfit (11) comprising a non-magnetic deformable body (15) for support of said magnetic means, said non magnetic deformable body being deformable in a direction (x) orthogonal to the level base (7) and having deformable or bendable walls (31, 32) which can permit said deformation, **characterised in that**, in its first dimensional configuration, the magnetic outfit has a dimension in the direction of deformation (X) which is smaller than the distance between inner faces (5A, 7A) of the level base (7) and the side (5) opposing the level base (7), the magnet outfit (11) further comprises a deforming screw unit (36) which connects said deformable or bendable walls (31, 32), manual actuation of which via an open end (8) of the cavity (3) deforms the non-magnetic deformable body (15) in a second dimensional configuration when it is inside the cavity (3) of the level (1), said deformation causing said magnetic outfit (11) and the magnetic means (10, 12, 600) to be blocked against the inner faces (5A, 7A) of the level base (7) and the side opposing the level base (7), said magnetic outfit (11) also comprising a rigid ferrous element (13, 610) which is coupled to said magnetic means (10, 12, 600) and is associated with the non-magnetic deformable body (15) deformable in a direction (X) orthogonal to said level base (7), and the magnetic outfit being able to adopt alternatively the first dimensional configuration and the second dimensional configuration, such as to be able to be introduced freely into said cavity (3) in a first configuration, and to be blocked in this cavity (3) in its second dimensional configuration, further to manual actuation of the deforming screw unit (36).

2. Magnetic outfit according to claim 1, **characterised in that** the blocking inside the cavity (3) of the level is manually removable via the open end (8) of the cavity (3) from the outside of the level, so as to return the magnetic outfit to the first dimensional configuration in order to be extracted from this cavity (3), such as to be able to be inserted again inside the cavity (3) of a body (2) of another level (1), where it is deformed to the second dimensional configuration and blocked in this other level.

3. Magnetic outfit according to claim 1, **characterized in that** said magnetic means are at least two permanent magnets which are adjacent to one another and separated from one another, a first permanent magnet having a first polarity which faces towards the rigid ferrous element, and the second permanent magnet having the second polarity facing towards this rigid ferrous element (13, 610), said permanent magnets being neodynium or ferrite magnets.

## Patentansprüche

1. Magnetische Einrichtung (11), die dafür gestaltet ist, entnehmbar in einen Hohlraum (3) an einem der Enden (8) eines nichtmagnetischen prismatischen Körpers (2) eines Nivellierinstruments (1) eingesetzt zu werden, wobei der prismatische Körper (2) des Nivellierinstruments mehrere Seiten (4, 5, 6, 7) aufweist, die den Hohlraum definieren, wobei eine (7) dieser Seiten als eine Nivellierbasis dient und eine andere (5) dieser Seiten der Nivellierbasis gegenüberliegt, wobei jede dieser Seiten eine Innenfläche (4A, 5A, 6A, 7A), die hin zu dem Hohlraum (3) weist, und eine Außenfläche (4B, 5B, 6B, 7B) aufweist und magnetische Mittel (10, 12, 600) mit einer ebenen Basis umfasst, die im Inneren dieses Hohlraums (3), parallel zur und anhaftend an einer Innenfläche (7A) der Nivellierbasis angeordnet sein können, wobei die magnetische Einrichtung (11) einen nichtmagnetischen verformbaren Körper (15) zum Tragen der magnetischen Mittel umfasst, wobei der nichtmagnetische verformbare Körper in eine Richtung (x) rechtwinklig zur Nivellierbasis (7) verformbar ist und verformbare oder biegsame Wände (31, 32) aufweist, welche die Verformung ermöglichen, **dadurch gekennzeichnet, dass** die magnetische Einrichtung in ihrer ersten dimensionalen Gestaltung eine Abmessung in der Richtung der Verformung (X) aufweist, die kleiner als der Abstand zwischen Innenflächen (5A, 7A) der Nivellierbasis (7) und der Seite (5) ist, die der Nivellierbasis (7) gegenüberliegt, wobei die magnetische Einrichtung (11) ferner eine Verformungsschraubeinheit (36) umfasst, welche die verformbaren oder biegsamen Wände (31, 32) verbindet, wobei die manuelle Betätigung selbiger über ein offenes Ende (8) des Hohlraums (3) den nichtmagnetischen verformbaren Körper (15) in eine zweite dimensionale Gestaltung verformt, wenn er sich innerhalb des Hohlraums (3) des Nivellierinstruments (1) befindet, wobei die Verformung bewirkt, dass die magnetische Einrichtung (11) und die magnetischen Mittel (10, 12, 600) an den Innenflächen (5A, 7A) der Nivellierbasis (7) und an der Seite, die der Nivellierbasis (7) gegenüberliegt, verblockt werden, wobei die magnetische Einrichtung (11) außerdem ein starres eisenhaltiges Element (13, 610) umfasst, das mit den magnetischen Mitteln (10, 12, 600) gekoppelt und dem nichtmagnetischen verformbaren Körper (15) zugeordnet ist, der in eine Richtung (X) rechtwinklig zur Nivellierbasis (7) verformbar ist, und die magnetische Einrichtung in der Lage ist, abwechselnd die erste dimensionale Gestaltung und die zweite dimensionale Gestaltung einzunehmen, so dass sie in der Lage ist, in einer ersten Gestaltung frei in den Hohlraum (3) eingeführt zu sein und in ihrer zweiten dimensionalen Gestaltung in diesem Hohlraum (3) verblockt zu sein, ferner zur manuellen Betätigung der Verformungsschraubeinheit (36).

2. Magnetische Einrichtung nach Anspruch 1, **dadurch gekennzeichnet, dass** die Verblockung in dem Hohlraum (3) des Nivellierinstruments mittels des offenen Endes (8) des Hohlraums (3) von außerhalb des Nivellierinstruments manuell entfernbar ist, sodass die magnetische Einrichtung in die erste dimensionale Gestaltung zurückgeführt wird, um aus diesem Hohlraum (3) herausgezogen zu werden, sodass sie erneut in das Innere des Hohlraums (3) eines Körpers (2) eines anderen Nivellierinstruments (1) eingesetzt werden kann, wo sie in die zweite dimensionale Gestaltung verformt und in diesem anderen Nivellierinstrument verblockt wird.

3. Magnetische Einrichtung nach Anspruch 1, **dadurch gekennzeichnet, dass** die magnetischen Mittel mindestens zwei Dauermagneten sind, die nebeneinander liegen und voneinander getrennt sind, wobei ein erster Dauermagnet eine erste Polarität aufweist, die zum starren eisenhaltigen Element weist, und der zweite Dauermagnet die zweite Polarität aufweist, die hin zu diesem starren eisenhaltigen Element (13, 610) weist, wobei die Dauermagnete Neodym- oder Ferritmagnete sind.

## Revendications

1. Ensemble magnétique (11) configuré pour être inséré de façon amovible dans une cavité (3) à l'une des extrémités (8) d'un corps prismatique non magnétique (2) d'un niveau (1), dans lequel le corps prismatique (2) du niveau possède une pluralité de côtés (4, 5, 6, 7) définissant la cavité, l'un (7) de ces côtés agissant comme une base plane et un autre (5) de ces côtés étant à l'opposé de la base plane, chacun de ces côtés disposant d'une face intérieure (4A, 5A, 6A, 7A) orientée vers ladite cavité (3) et d'une face extérieure (4B, 5B, 6B, 7B) et comprenant des moyens magnétiques (10, 12, 600) avec une base plate pouvant être placée à l'intérieur de cette cavité (3) parallèlement et adhérant à une surface intérieure (7A) de la base plane, ledit ensemble magnétique (11) comprenant un corps déformable non magnétique (15) pour le support desdits moyens magnétiques, ledit corps déformable non magnétique étant déformable dans une direction (X) orthogonale à la base plane (7) et possédant des parois pliables ou déformables (31, 32) permettant ladite déformation, **caractérisé en ce que** dans sa première configuration de dimension, l'ensemble magnétique possède une dimension dans la direction de déformation (X) qui est inférieure à la distance entre les faces intérieures (5A, 7A) de la base plane (7) et du côté (5) opposé à la base plane (7), l'ensemble magnétique (11) comprend également une unité de vis se déformant (36) qui connecte lesdites parois pliables ou déformables (31, 32), dont l'actionnement manuel via une extrémité ouverte (8) de la cavité (3) déforme le corps déformable non magnétique (15) dans une seconde configuration de dimension lorsqu'il est à l'intérieur de la cavité (3) du niveau (1), ladite déformation provoquant le blocage dudit ensemble magnétique (11) et des moyens magnétiques (10, 12, 600) contre les faces intérieures (5A, 7A) de la base plane (7) et le côté à l'opposé de la base plane (7), ledit ensemble magnétique (11) comprenant également un élément ferreux rigide (13, 610) qui est couplé auxdits moyens magnétiques (10, 12, 600) et est associé au corps déformable non magnétique (15) déformable dans une direction (X) orthogonale à ladite base plane (7), et l'ensemble magnétique étant apte à adopter en alternance la première configuration de dimension et la seconde configuration de dimension, de façon à pouvoir être librement introduit dans ladite cavité (3) dans une première configuration et à être bloqué dans cette cavité (3) dans sa seconde configuration de dimension, suite à l'actionnement manuel de l'unité de vis se déformant (36).

2. Ensemble magnétique selon la revendication 1, **caractérisé en ce que** le blocage à l'intérieur de la cavité (3) du niveau est manuellement amovible via l'extrémité ouverte (8) de la cavité (3) depuis l'extérieur du niveau, afin de faire revenir l'ensemble magnétique à la première configuration de dimension pour qu'il soit extrait de cette cavité (3), de façon à pouvoir être inséré à nouveau à l'intérieur de la cavité (3) d'un corps (2) d'un autre niveau (1), où il est déformé selon la seconde configuration de dimension et bloqué dans cet autre niveau.

3. Ensemble magnétique selon la revendication 1, caractérisé en que lesdits moyens magnétiques sont au moins deux aimants permanents qui sont adjacents l'un par rapport à l'autre et séparés l'un de l'autre, un premier aimant permanent disposant d'une première polarité orientée vers l'élément ferreux rigide et le second aimant permanent disposant de la seconde polarité orientée vers cet élément ferreux rigide (13, 610), lesdits aimants permanents étant des aimants en ferrite ou au néodyme.
